# EUROPEAN PATENT SPECIFICATION

(11) **EP 3 587 872 B1**
(45) Date of publication and mention of the grant of the patent: **05.07.2023**
(21) Application number: 18758024.6
(22) Date of filing: 16.02.2018
(51) Int. Cl.: F16J 15/44, F04D 29/12, F16J 15/34, F16J 15/38

(54) **SEAL DEVICE**
DICHTUNGSVORRICHTUNG
DISPOSITIF D'ÉTANCHÉITÉ

(30) Priority: 22.02.2017 JP 2017031237
(43) Date of publication of application: 01.01.2020
(73) Proprietor: Eagle Industry Co., Ltd., Minato-ku Tokyo 105-8587 (JP)
(72) Inventor: TOKUNAGA Yuichiro, Tokyo 105-8587 (JP); INOUE Hideyuki, Tokyo 105-8587 (JP); KIMURA Wataru, Tokyo 105-8587 (JP); IGUCHI Tetsuya, Tokyo 105-8587 (JP); KASAHARA Hidetoshi, Tokyo 105-8587 (JP); HIROMATSU Jun, Tokyo 105-8587 (JP); KUROKI Yasuhiro, Tokyo 105-8587 (JP); KIKUCHI Ryu, Tokyo 105-8587 (JP)
(74) Representative: TBK
(86) International application number: PCT/JP2018/005377
(87) International publication number: WO 2018/155318

(56) References cited:
- WO-A1-2016/085673
- CN-U- 203 202 226
- JP-A- S6 182 075
- JP-A- H10 196 800
- JP-A- H10 196 800
- JP-A- 2010 112 486
- US-A- 3 823 950
- US-A1- 2014 008 872
- US-B2- 9 127 683

## Description

### Technical Field

The present invention relates to a sealing device according to the preamble of claim 1 suitable for a rotating shaft, and more particularly, relates to a sealing device including a floating ring, which is a noncontact annular seal, suitable for a shaft seal part of a large-sized high-speed rotating machine, or a rotating shaft of a turbopump for a liquid-fuel cryogenic for a rocket engine, or the like.

### Background Art

In high-speed rotating equipment such as a cryogenic liquid fuel turbopump for a rocket engine, the shaft vibration of a rotating shaft has frequently presented a problem. Increases in shaft vibration in the manner of self-excited vibration could result in not only the breakdown of the machine but also a serious accident. Thus, techniques for reducing shaft vibration have been studied.

As a sealing device including a floating ring, for example, one disclosed in JP S57 154562 A (hereinafter, referred to as "Patent Document 1") is known (hereinafter, referred to as "Conventional Art 1"). In Conventional Art 1 disclosed in Patent Document 1, a plurality of leaf springs is provided circumferentially at equal intervals at
the outer circumference of an annular floating ring provided around a rotating shaft, the leaf springs are supported on a housing, which is the stationary side, and the floating ring is fitted in a floating state by the leaf springs, to dampen the vibration of the floating ring in a direction perpendicular to the axis caused by the vibration of the rotating shaft, and to maintain a constant clearance between the inner peripheral surface of the floating ring and the rotating shaft by the wedge effect generated between the inner peripheral surface of the floating ring and the rotating shaft (the effect of dynamic pressure generated at a wedge portion) and the Lomakin effect (the aligning effect due to inflow losses between the surfaces of the seal ring and the shaft when seal differential pressure develops).

As another sealing device including a floating ring, one disclosed in JP 2000 310342 A (hereinafter, referred to as "Patent Document 2") is known (hereinafter, referred to as "Conventional Art 2"). In Conventional Art 2 disclosed in Patent Document 2, support means including an annular holder and a cylindrical sleeve is provided on the low-pressure side of an annular floating ring provided around a rotating shaft, so as not to prevent the alignment action of the floating ring even when frictional resistance acting between the annular holder and the floating ring increases.

As still another sealing device including a floating
ring, one disclosed in JP S62 2865 U (hereinafter, referred to as "Patent Document 3") is known (hereinafter, referred to as "Conventional Art 3"). Conventional Art 3 disclosed in Patent Document 3 relates to a liquid-seal-type shaft sealing device for a gas compressor, and provides a hydraulic chamber in which oil is sealed with O-rings interposed between the back of a seal ring and a casing to form a damper mechanism, thereby preventing the vibration of the seal ring.

The sealing device including the floating ring in Conventional Art 1 can damp the vibration of the floating ring in the direction perpendicular to the axis caused by the vibration of the rotating shaft by the plurality of leaf springs at the outer circumference of the floating ring, but it does not have the technical idea of reducing the vibration of the rotating shaft.

The sealing device including the floating ring in Conventional Art 2 is limited to not preventing the alignment action of the floating ring even when frictional resistance acting between the annular holder and the floating ring increases, and it does not have the technical idea of reducing the vibration of the rotating shaft.

The sealing device including the seal ring in Conventional Art 2 can damp the vibration of the seal ring by the damper mechanism formed of the hydraulic chamber, but it does not have the technical idea of reducing the vibration of the rotating shaft.

Patent Document 4 discloses a generic sealing device having the features of the preamble of claim 1. Patent Document 5 discloses another conventional sealing device.

### CITATION LIST

### PATENT DOCUMENTS

Patent Document 1: JP S57 154562 A
Patent Document 2: JP 2000 310342 A
Patent Document 3: JP S62 2865 U
Patent Document 4: US 3 823 950 A
Patent Document 5: US 9 127 683 B2

### SUMMARY OF THE INVENTION

### Problem to be Solved by the Invention

It is an object of the present invention to provide a sealing device including a floating ring around a rotating shaft, which prevents leakage and also has the effect of reducing the vibration of the rotating shaft by imparting a radial restoring force against the eccentricity of the rotating shaft to restore it to its axis position, and a tangential damping force to reduce the whirling of the rotating shaft.

### Means for Solving Problem

The object is achieved by a sealing device having the features of claim 1. Further advantageous developments of the present invention are set out in the dependent claims.

To attain the above object, a sealing device according to the present invention includes a floating ring in a space between an outer circumference of a rotating shaft and an inner circumference of a housing, and a permeable damping member provided around an outer peripheral portion of the floating ring.

According to the present invention, the sealing device capable of imparting a radial restoring force against the eccentricity of the rotating shaft to restore it to its axis position, and a tangential damping force to reduce the whirling of the rotating shaft, to prevent leakage and also have the effect of reducing the vibration of the rotating shaft can be provided.

According to the present invention, the permeable damping member is formed of a wire mesh damper formed from wire mesh composed of metallic wires or plastic wires woven into a mesh structure.

According to the present invention, a frictional force due to friction between the wires and a damping force due to the viscous drag (damper) of sealed fluid present in the spaces between the wires can be efficiently obtained.

Preferably, the permeable damping member may be formed in a hollow cylindrical shape.

Accordingly, the permeable damping member can be fitted using a space around the outer peripheral portion of the floating ring without the housing being subjected to special processing.

Preferably, the hollow cylindrical permeable damping member may be set such that an inner peripheral surface thereof is in contact with an outer peripheral surface of the floating ring, and an outer peripheral surface thereof is in contact with a radially inner peripheral surface of the housing defining the space.

Accordingly, a radial restoring force against the eccentricity of the rotating shaft to restore it to its axis position and a tangential damping force to reduce the whirling of the rotating shaft can be increased.

Preferably, an axial width of the hollow cylindrical permeable damping member may be set to a length to provide slight gaps between opposite ends thereof and opposite inner side surfaces of the housing.

Accordingly, a damping force due to the viscous drag (damper) of the sealed fluid can be increased.

According to the present invention, the sealing device further includes a sealing face formed by an inner surface of the housing and a low-pressure-side side surface of the floating ring, the sealing face being provided with an introduction recess capable of introducing sealed fluid.

According to the present invention, the sealing face can be maintained in a good lubrication state.

### Effect of the Invention

The present invention achieves the following outstanding effects:
(1) The sealing device includes the floating ring in the space between the outer circumference of the rotating shaft and the inner circumference of the housing, and the permeable damping member provided around the outer peripheral portion of the floating ring. Consequently, the sealing device capable of imparting a radial restoring force against the eccentricity of the rotating shaft to restore it to its axis position, and a tangential damping force to reduce the whirling of the rotating shaft, to prevent leakage and also have the effect of reducing the vibration of the rotating shaft can be provided.
(2) The permeable damping member is formed of the wire mesh damper formed from the wire mesh composed of the metallic wires or the plastic wires woven into the mesh structure. Consequently, a frictional force due to friction between the wires and a damping force due to the viscous drag (damper) of the sealed fluid present in spaces between the wires can be efficiently obtained.
(3) The permeable damping member is preferably formed in a hollow cylindrical shape. Consequently, the permeable damping
   member can be fitted using the space around the outer peripheral portion of the floating ring without the housing being subjected to special processing.
(4) Preferably, the hollow cylindrical permeable damping member is set such that the inner peripheral surface thereof is in contact with the outer peripheral surface of the floating ring, and the outer peripheral surface thereof is in contact with the radially inner peripheral surface of the housing defining the space. Consequently, a radial restoring force against the eccentricity of the rotating shaft to restore it to its axis position and a tangential damping force to reduce the whirling of the rotating shaft can be increased.
(5) Preferably, the axial width of the hollow cylindrical permeable damping member is set to a length to provide slight gaps between opposite ends thereof and opposite inner side surfaces of the housing. Consequently, a damping force due to the viscous drag (damper) of the sealed fluid can be increased.
(6) According to the present invention, the sealing face formed by the inner surface of the housing and the low-pressure-side side surface of the floating ring is provided with the introduction recess capable of introducing sealed fluid. Consequently, the sealing face can be maintained in a good lubrication state.

### BRIEF DESCRIPTION OF THE DRAWINGS

FIG. 1 is a front cross-sectional view schematically showing a sealing device according to a first embodiment of the present invention.
FIG. 2 is a cross-sectional view taken along line A-A in FIG. 1.
FIG. 3 is a schematic diagram for explaining the effect of reducing the whirling of a rotating shaft in the sealing device according to the first embodiment of the present invention.

### DESCRIPTION OF EMBODIMENT

Hereinafter, with reference to the drawings, a mode for carrying out this invention will be described illustratively based on an embodiment. However, the dimensions, materials, shapes, relative arrangements, and others of components described in the embodiment are not intended to limit the scope of the present invention only to them unless otherwise explicitly described.

### First Embodiment

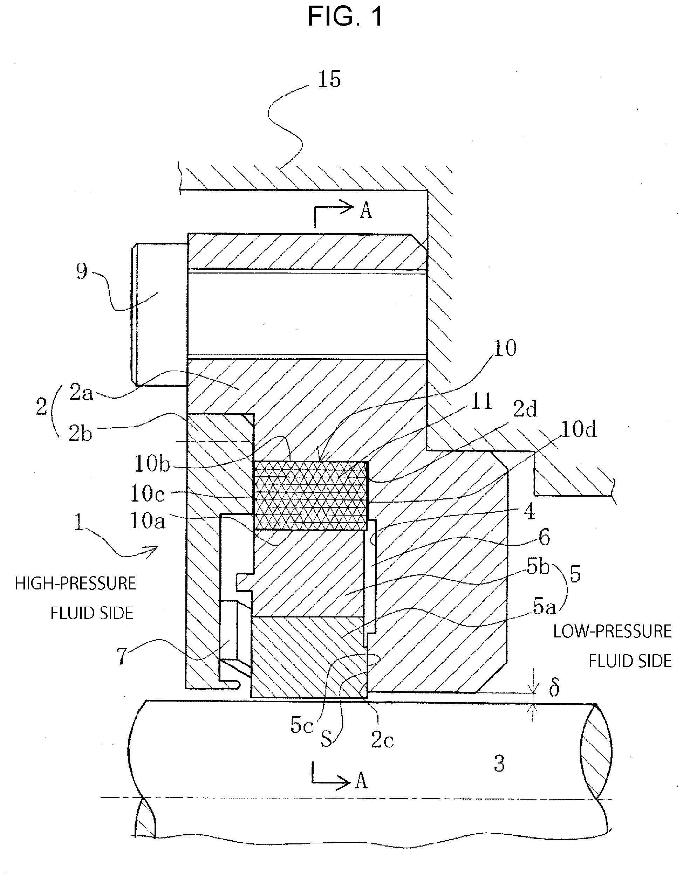

With reference to FIGS. 1 to 3, a sealing device according to a first embodiment of the present invention will be described.

In FIG. 1, a rotating shaft 3 of a fluid machine is provided extending through a casing 15. The left side is the high-pressure fluid side, and the right side is the low-pressure fluid side. On the high-pressure fluid side, water, gas, oil, cryogenic fluid, or the like, which is sealed fluid, is sealed in.

A sealing device 1 mainly includes a floating ring 5 and a housing 2 placing the floating ring 5.

The housing 2 is mainly formed of a housing body 2a and a cover member 2b. The housing body 2a is fixed to the casing 15 by a fastener 9. A space 4 defined by a radially inner portion of the housing body 2a and the cover member 2b is formed. The cover member 2b is fixed to the housing body 2a by a fastener.

A radial clearance δ is provided between an inner peripheral surface of the housing 2 and an outer peripheral surface of the rotating shaft 3. To seal the clearance δ, the floating ring 5 of a hollow cylindrical shape is provided around the outer circumference of the rotating shaft 3. The floating ring 5 is formed integrally or separately, depending on its diameter.

The floating ring 5 includes a floating ring body 5a formed of a material with an excellent self-lubricating property such as carbon, and a metallic support ring 5b fitted on the radially outer side of the body 5a, and is formed such that it is not broken even when the floating ring body 5a is brought into contact with the rotating shaft 3 due to the whirling of the rotating shaft 3.

The diameter and the width of the space 4 in the housing 2 are larger than the outer diameter and the width of the floating ring 5.

The inner diameter of the floating ring 5 is set to be slightly larger than the outer diameter of the rotating shaft 3, so that the floating ring 5 can move radially in a certain range. The radial clearance between the rotating shaft 3 and the floating ring 5 is set to be extremely small to minimize the leakage of the sealed fluid through the clearance.

A sealing face S is formed at a contact portion between a low-pressure-side side surface 5c of the floating ring body 5a and an inner surface 2c of the housing body 2a opposite the side surface 5c. The sealing face S is provided with an introduction recess 6 for introducing the sealed fluid in the space 4 to maintain good lubrication of the sealing face S.

The floating ring 5 is pressed against the inner surface 2c of the housing body 2a by the sealed fluid at high pressure, preventing leakage between the floating ring 5 and the housing body 2a at the sealing face S.

A spring 7 may be provided to bias the floating ring 5 toward the inner surface 2c of the housing body 2a.

The floating ring 5 is provided with a rotation-preventing pin (not shown) extending axially. The rotation-preventing pin is loosely fitted into a groove provided in the housing 2, thereby preventing the rotation of the floating ring 5.

Rotation-preventing means for the floating ring 5 is not limited to the rotation-preventing pin.

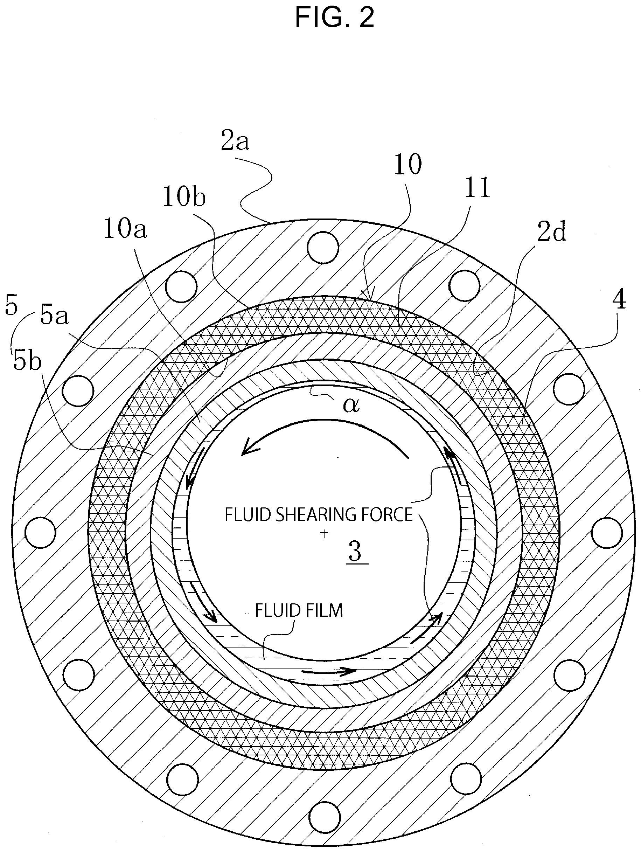

FIG. 2 is a cross-sectional view taken along line A-A in FIG. 1, and shows a state where the rotating shaft 3 starts to rotate.

Now, when the rotating shaft 3 starts to rotate in a counterclockwise direction, a force to lift the floating ring 5 is generated by the wedge effect at a clearance α caused by the sealed fluid interposed between the rotating shaft 3 and the floating ring 5. At this time, if the weight of the floating ring 5 > the force to lift the floating ring 5 generated due to the wedge effect between the rotating shaft 3 and the floating ring 5, the center of the floating ring 5 is located below the center of the rotating shaft 3. In this state, a fluid film interposed between the outer circumference of the rotating shaft 3 and the inner circumference of the floating 5 is locally thinner. Consequently, there is a risk of contact between the inner peripheral surface of the floating ring 5 and the outer peripheral surface of the rotating shaft 3 when the rotating shaft 3 starts such behavior as whirling. To avoid such a risk, it is necessary to set a large clearance between the inner peripheral surface of the floating ring 5 and the outer peripheral surface of the rotating shaft 3. Unfortunately, an increase in the clearance results in an increase in the amount of leakage of the sealed fluid from the clearance in proportion to the third power of the clearance.

The present invention provides a sealing device that prevents leakage and also has the effect of reducing the vibration of the rotating shaft 3 by imparting a radial restoring force against the eccentricity of the rotating shaft 3 to restore it to its axis position, and a tangential damping force to reduce the whirling of the rotating shaft 3. For that purpose, as shown in FIGS. 1 and 2, a permeable damping member, e.g. a wire mesh damper 10 formed from wire mesh is provided around an outer peripheral portion of the floating ring 5.

The permeable damping member is a member into which fluid permeates, and generates a damping force against the deformation of the permeable damping member due to the viscous drag of fluid when the fluid permeates through it. It may be any member having elasticity, and may be any member that is radially elastically deformable when provided around the outer peripheral portion of the floating ring 5.

Examples of the permeable damping member include open-celled foam rubber and foam plastic, in addition to the wire mesh damper.

The wire mesh damper 10 is formed from metallic wires 11 such as steel or a nickel-chromium alloy (or plastic wires such as polypropylene or polyethylene) woven into a mesh structure. Its density is determined in design.

Metallic wire or plastic wire, which is the material of the wire mesh damper 10, is preferably an elastically deformable material.

As shown in FIGS. 1 and 2, the wire mesh damper 10 is formed in a hollow cylindrical shape so that its inner peripheral surface 10a is in contact with an outer peripheral surface of the floating ring 5, and its outer peripheral surface 10b is in contacts with a radially inner peripheral surface 2d of the housing body 2a defining the space 4.

Thus, when the rotating shaft 3 is decentered, a radial restoring force to push the rotating shaft 3 back to its axis position acts due to the restoring action of the wire mesh damper 10, so that the rotating shaft 3 can be pushed back to its axis position. Consequently, the sealing face S between the side surface 5a of the floating ring 5 and the side surface 4a of the housing 1 can be maintained in a normal state to maintain the sealing effect.

As shown in FIG. 1, the width (axial length) of the wire mesh damper 10 is set to a length to provide slight gaps between opposite ends 10c and 10d thereof and opposite inner side surfaces of the housing 2, so that the sealed fluid is present on opposite sides of the wire mesh damper 10.

The sealed fluid on the high-pressure fluid side permeates through the wire mesh damper 10, enters the side of the end 10d, and further, enters the introduction recess 6, lubricating the sealing face S.

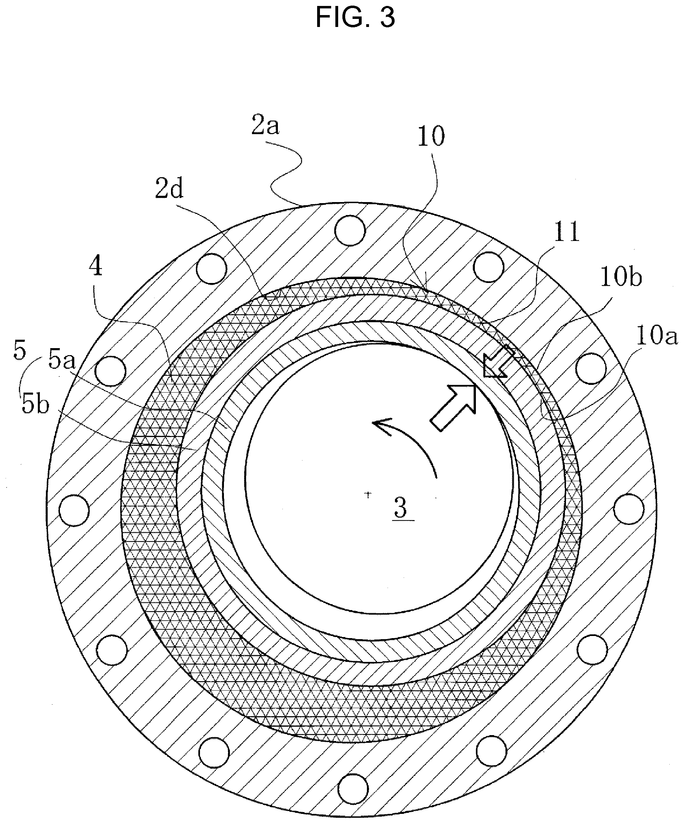

Next, with reference to FIG. 3, in the sealing device of the present invention, the effect of reducing the whirling of the rotating shaft 3 by when it whirls with a certain period in a state decentered from its axis will be described.

Assume a state where the rotating shaft 3 is decentered to the upper right from its axis as shown in FIG. 3 in a whirling state of the rotating shaft 3. The floating ring 5 is pressed by the rotating shaft 3 and moves to the upper-right or radially outwards. When the floating ring 5 moves to the upper-right or radially outwards, an upper right portion of the wire mesh damper 10 is compressed. When the wire mesh damper 10 is deformed, a frictional force is generated by friction between the woven wires 11, and a damping force against the deformation of the wires 11 is generated by the viscous drag (damper) of the sealed fluid present in the spaces between the wires 11.

The frictional force and the damping force generated by the viscous drag are transmitted to the rotating shaft 3 via the floating ring 5, acting as a tangential damping force to reduce the whirling of the rotating shaft 3.

On the other hand, at the lower left opposite to the movement direction of the floating ring 5, the space between the outer peripheral surface of the support ring 6 and the inner peripheral surface 2d of the housing body 2a becomes large, so that the spaces between the wires 11 of the wire mesh damper 10 become large. The sealed fluid present outside the wire mesh damper 10 flows into the spaces between the wires 11, and the spaces are filled with the sealed fluid.

The sealing device according to the first embodiment of the present invention is as described above, and has the following outstanding advantages:
(1) In the sealing device including the floating ring 5 in the space between the outer circumference of the rotating shaft 3 and the inner circumference of the housing 1, the permeable damping member is provided around the outer peripheral portion of the floating ring 5. Consequently, the sealing device capable of imparting a radial restoring force against the eccentricity of the rotating shaft to restore it to its axis position, and a tangential damping force to reduce the whirling of the rotating shaft, to prevent leakage and also have the effect of reducing the vibration of the rotating shaft can be provided.
(2) The permeable damping member is formed of the wire mesh damper 10 formed from wire mesh composed of metallic wires or plastic wires woven into a mesh structure. Consequently, a frictional force due to friction between the wires 11 and a damping force due to the viscous drag (damper) of the sealed fluid present in the spaces between the wires 11 can be efficiently obtained.
(3) The permeable damping member is formed in a hollow cylindrical shape, and thus can be fitted using a space around the outer peripheral portion of the floating ring 5 without the housing being subjected to special processing.
(4) The hollow cylindrical permeable damping member is set such that its inner peripheral surface is in contact with the outer peripheral surface of the floating ring 5, and its outer peripheral surface is in contact with the radially inner peripheral surface 2d of the housing body 2a defining the space. Consequently, a radial restoring force against the eccentricity of the rotating shaft 3 to restore it to its axis position and a tangential damping force to reduce the whirling of the rotating shaft 3 can be increased.
(5) The axial width of the hollow cylindrical permeable damping member is set to a length to provide slight gaps between opposite ends thereof and opposite inner side surfaces of the housing 2. Consequently, a damping force due to the viscous drag (damper) of the sealed fluid can be increased.
(6) The sealing face S formed by the housing inner surface 2c and the low-pressure-side side surface 5c of the floating ring 5 is provided with the introduction recess 6 capable of introducing the sealed fluid. Consequently, the sealing face S can be maintained in a good lubrication state.

Although the embodiment of the present invention has been described above with reference to the drawings, its specific configuration is not limited to the embodiment. Any changes and additions made without departing from the scope of the present invention as defined by the claims are included in the present invention.

For example, the above embodiment has described the case where the hollow cylindrical wire mesh damper 10 is set such that its inner peripheral surface 10a is in contact with the outer peripheral surface of the floating ring 5, and its outer peripheral surface 10b is in contact with the radially inner peripheral surface 2d of the housing body 2a defining the space 4. However, the wire mesh damper 10 is not limited to this, and its outer diameter may be set to provide a gap between the outer peripheral surface 10b and the inner peripheral surface 2d of the housing body 2a.

For example, the above embodiment has described the case where the axial width of the hollow cylindrical wire mesh damper 10 is set to a length to provide slight gaps between the wire mesh damper 10 and opposite inner side surfaces of the housing 2. However, the wire mesh damper 10 is not limited to this, and may be reduced in axial width, depending on the density of the wire mesh and the viscosity of the sealed fluid, for example.

Although the present invention is applied to the sealing device as the principle purpose, it may be applied to a damping device for damping the vibration of a shaft.

### Reference Signs List

- 1: sealing device
- 2: housing
- 2a: housing body
- 2b: cover member
- 2c: inner surface
- 2d: inner peripheral surface
- 3: rotating shaft
- 4: space
- 5: floating ring
- 5a: floating ring body
- 5b: support ring
- 5c: low-pressure-side side surface
- 6: introduction recess
- 7: spring
- 9: fastener
- 10: permeable damping member (wire mesh damper)
- 10a: inner peripheral surface
- 10b: outer peripheral surface
- 10c, 10d: opposite ends
- 11: metallic wire (plastic wire)
- 15: casing
- S: sealing face
- δ: clearance between inner peripheral surface of housing and outer peripheral surface of rotating shaft
- α: clearance between rotating shaft and floating ring

## Claims

1. A sealing device (1) comprising:
a floating ring (5) in a space (4) between an outer circumference of a rotating shaft (3) and an inner circumference of a housing (2);
a permeable damping member (10) provided around an outer peripheral portion of the floating ring (5), and
a sealing face (S) formed by an inner surface of the housing (2) and a low-pressure-side side surface of the floating ring (5), wherein
the permeable damping member (10) is formed of a wire mesh damper (10) formed from wire mesh composed of metallic wires or plastic wires woven into a mesh structure, **characterized in that**
the sealing face (S) is provided with an introduction recess (6) capable of introducing sealed fluid.

2. The sealing device (1) according to claim 1, wherein the permeable damping member (10) is formed in a hollow cylindrical shape.

3. The sealing device (1) according to claim 2, wherein the hollow cylindrical permeable damping member (10) is set such that an inner peripheral surface (10a) thereof is in contact with an outer peripheral surface of the floating ring (5), and an outer peripheral surface (10b) thereof is in contact with a radially inner peripheral surface (2d) of the housing (2) defining the space (4).

4. The sealing device (1) according to claim 2 or 3, wherein an axial width of the hollow cylindrical permeable damping member (10) is set to a length to provide slight gaps between opposite ends (10c, 10d) thereof and opposite inner side surfaces of the housing (2).

## Patentansprüche

1. Dichtungsvorrichtung (1), die aufweist:
einen Schwimmring (5) in einem Raum (4) zwischen einem Außenumfang einer Drehwelle (3) und einem Innenumfang eines Gehäuses (2);
ein durchlässiges Dämpfungsbauteil (10), das um einen Außenumfangsabschnitt des Schwimmrings (5) vorgesehen ist, und
eine Dichtungsfläche (S), die von einer Innenfläche des Gehäuses (2) und einer niederdruckseitigen Seitenfläche des Schwimmrings (5) gebildet ist, wobei
das durchlässige Dämpfungsbauteil (10) aus einem Drahtgeflechtdämpfer (10) gebildet ist, der aus einem Drahtgeflecht gebildet ist, das aus Metalldrähten oder Kunststoffdrähten besteht, die zu einem Geflechtaufbau gewoben sind, **dadurch gekennzeichnet, dass**
die Dichtungsfläche (S) mit einer Einleitvertiefung (6) versehen ist, die geeignet ist, abgedichtetes Fluid einzuleiten.

2. Dichtungsvorrichtung (1) nach Anspruch 1, wobei das durchlässige Dämpfungsbauteil (10) in einer hohlzylindrischen Form geformt ist.

3. Dichtungsvorrichtung (1) nach Anspruch 2, wobei das hohlzylindrische durchlässige Dämpfungsbauteil (10) so angeordnet ist, dass seine innere Umfangsfläche (10a) mit einer äußeren Umfangsfläche des Schwimmrings (5) in Berührung ist, und seine äußere Umfangsfläche (10b) mit einer radialen Innenumfangsfläche (2d) des Gehäuses (2) in Berührung ist, das den Raum (4) definiert.

4. Dichtungsvorrichtung (1) nach Anspruch 2 oder 3, wobei eine axiale Breite des hohlzylindrischen durchlässigen Dämpfungsbauteils (10) auf eine Länge eingestellt ist, um leichte Spalte zwischen seinen gegenüberliegenden Enden (10c, 10d) und gegenüberliegenden inneren Seitenflächen des Gehäuses (2) bereitzustellen.

## Revendications

1. Dispositif d'étanchéité (1) comprenant :
un anneau flottant (5) placé dans un espace (4) entre une circonférence externe d'une tige tournante (3) et une circonférence interne d'un logement (2) ;
un élément d'amortissement perméable (10) disposé autour d'une partie périphérique externe de l'anneau flottant (5), et
une face d'étanchéité (S) formée par une surface interne du logement (2) et une surface latérale côté basse pression de l'anneau flottant (5), dans lequel
l'élément d'amortissement perméable (10) est formé d'un amortisseur en treillis métallique (10) formé à partir d'un treillis métallique composé de fils métalliques ou de fils en plastique tissés dans une structure en treillis, **caractérisé en ce que**
la face d'étanchéité (S) est pourvue d'un évidement d'introduction (6) susceptible d'introduire un fluide scellé.

2. Dispositif d'étanchéité (1) selon la revendication 1, dans lequel l'élément d'amortissement perméable (10) est formé dans une forme cylindrique creuse.

3. Dispositif d'étanchéité (1) selon la revendication 2, dans lequel l'élément d'amortissement perméable cylindrique creux (10) est défini de telle sorte qu'une surface périphérique interne (10a) de celui-ci soit en contact avec une surface périphérique externe de l'anneau flottant (5), et qu'une surface périphérique externe (10b) de celui-ci soit en contact avec une surface périphérique radialement interne (2d) du logement (2) définissant l'espace (4).

4. Dispositif d'étanchéité (1) selon la revendication 2 ou 3, dans lequel une largeur axiale de l'élément d'amortissement perméable cylindrique creux (10) est définie sur une longueur permettant de fournir de légers écartements entre des extrémités opposées (10c, 10d) de celui-ci et des surfaces latérales internes opposées du logement (2).
